# EUROPEAN PATENT APPLICATION

(11) **EP 4 507 358 A1**
(43) Date of publication of application: **12.02.2025**
(21) Application number: 22935567.2
(22) Date of filing: 01.04.2022
(51) Int. Cl.: H04W 16/28, H04W 64/00, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); ZHENG, Xufei, Beijing 100190 (CN); LIU, Liu, Beijing 100190 (CN); WANG, Jing, Beijing 100190 (CN); WANG, Xin, Beijing 100190 (CN)
(74) Representative: Hoffmann Eitle
(86) International application number: PCT/JP2022/017000
(87) International publication number: WO 2023/188432

(57) **Abstract**

A terminal according to one aspect of the present disclosure includes a transmitting section that transmits position information of the terminal, a receiving section that receives at least one of first information related to an angle of arrival of a signal in the terminal based on the position information and second information related to an angle of departure of a signal in the terminal based on the position information, and a control section that judges at least one of a receive beam of a downlink signal based on the first information and a transmit beam of an uplink signal based on the second information. According to one aspect of the present disclosure, preferable overhead reduction/channel estimation/use of resources can be implemented.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Regarding future radio communication technology, utilizing artificial intelligence (AI) technology such as machine learning (ML) for control, management, and the like of a network/device has been under study. For example, regarding future radio communication technology, determining transmit and receive beams in a user terminal (user apparatus, user equipment (UE)) using a position of the UE has been under study.

However, studies on specific details of such beam determination have not yet been carried out. Unless these are appropriately defined, appropriate overhead reduction/high-accuracy channel estimation/high-efficiency use of resources cannot be achieved, which may hinder enhancement of communication throughput/communication quality.

In view of this, the present disclosure has one object to provide a terminal, a radio communication method, and a base station that can implement preferable overhead reduction/channel estimation/use of resources.

### Solution to Problem

A terminal according to one aspect of the present disclosure includes a transmitting section that transmits position information of the terminal, a receiving section that receives at least one of first information related to an angle of arrival of a signal in the terminal based on the position information and second information related to an angle of departure of a signal in the terminal based on the position information, and a control section that determines at least one of a receive beam of a downlink signal based on the first information and a transmit beam of an uplink signal based on the second information. Advantageous Effects of Invention

According to one aspect of the present disclosure, preferable overhead reduction/channel estimation/use of resources can be implemented.

### Brief Description of Drawings

[FIG. 1] FIG. 1 is a diagram to show an example of a method of indicating beams (TCI states) for a PDSCH/PDCCH in Rel. 15/16.
[FIG. 2] FIG. 2 is a diagram to show an example of a method of configuring a parameter indicating an AoA/AoD according to option 1-1-1-1.
[FIG. 3] FIG. 3 is a diagram to show an example of application of the AoA according to option 1-1-3.
[FIG. 4] FIG. 4 is a diagram to show an example of direction grids indicating information related to AoAs/AoDs according to option 1-2.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.
[FIG. 9] FIG. 9 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

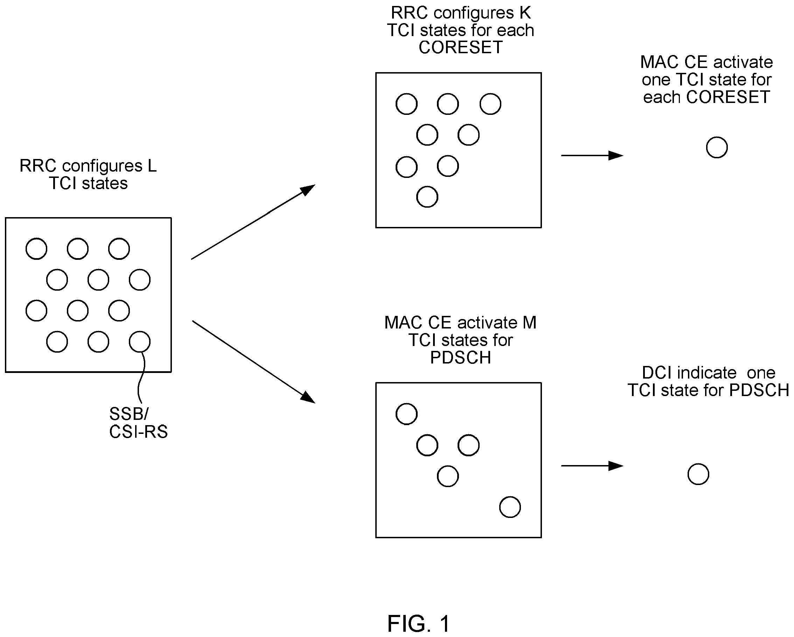

Beams for the PDSCH/PDCCH in Rel. 15/16 are indicated by TCI states (see FIG. 1).

As shown in FIG. 1, L TCI states (a pool/list of TCI states including the L TCI states) are configured for the UE, using RRC. L may be up to 128.

As shown in FIG. 1, regarding the PDCCH, K TCI states are configured for each CORESET from the pool of TCI states, using RRC. K may be up to 64. When K > 1, the UE is activated/indicated with one TCI state for each CORESET, using a MAC CE.

As shown in FIG. 1, regarding the PDSCH, M TCI states are activated from the pool of TCI states, using a MAC CE. M may be up to 8. When an RRC parameter (for example, tci-presentInDCI) indicating inclusion of a TCI field in DCI is configured for the UE, the UE is indicated with one TCI state to be applied to the PDSCH, using the DCI (the TCI field included therein).

### (Application of Artificial Intelligence (AI) Technology to Radio Communication)

Regarding future radio communication technology, utilizing AI technology such as machine learning (ML) for control, management, and the like of a network/device has been under study.

Fingerprinting localization, by which positions of radio devices are estimated with use of propagation characteristics of radio signals, is widely used in both scenarios of Line Of Sight (LOS)/Non-Line Of Sight (NLOS).

In the present disclosure, LOS may mean that the UE and the base station are in an environment in which both can have unobstructed views of each other (or there is no obstruction), and NLOS may mean that the UE and the base station are not in an environment in which both can have unobstructed views of each other (or there is an obstruction).

In fingerprinting localization, the position of the UE is estimated based on a database/AI model from fingerprints of a plurality of transmission paths (multipath) of the UE.

Taking advantage the method, causing building/learning of a database/AI model for inferring information of a plurality of paths from the position of the UE has been under study.

The information of multipath may be, for example, information related to an angle of arrival (AoA)/angle of departure (AoD) of a signal in optimal/candidate transmission paths.

Note that, in the present disclosure, the information related to the AoA may include, for example, information related to at least one of azimuth angles of arrival and zenith angles of arrival. The information related to the AoD may include, for example, information related to at least one of azimuth angles of departure and zenith angles of departure (zenith angles of departure).

It is considered that, by using the AoA/AoD of such optimal transmission paths, a beam (which may be referred to as a Tx beam) transmitted by the base station (a network, a gNB) and a beam (Rx beam) received by the UE can be determined without performing beam sweeping.

In NR, what ultimately determines the quality of a communication link between the base station and the UE is selection of the Tx beam (in the base station) and the Rx beam (in the terminal) (which may be referred to as a pair of beams). From a beam indication, the UE recognizes which Rx beam is to be used. In DL transmission, in order to determine the receive beam to be used for receiving DL data, the UE depends upon the beam indication from the base station.

Optimal Tx beams for different Rx beams may be different, and optimal Rx beams for different Tx beams may be different.

Selection/determination of the Rx beam is transparent in the base station. Essentially, which Rx beam is optimal is to be determined based on the AoA of a signal from the perspective of the UE. However, in existing specifications, selection/determination of the Rx beam is transparent to the base station, and in order to cause the UE to measure/select (/determine) the Rx beam on its own, the base station needs to repeatedly perform transmission using the same Tx beam.

The base station indicates, to the UE, the Tx beam (of the base station) to be used for transmission of a signal, using the TCI state. The UE receives the signal, using the Rx beam paired with the indicated beam.

In an environment using millimeter waves (mmW), the base station and the UE need to support a large number of Tx beams and Rx beams. To support selection/determination of an optimal beam pair, overhead of a signal for measuring beams and power consumption of the UE may increase. When M Tx beams and N Rx beams are assumed, a total of M × N measurements are required to select/determine an optimal beam pair.

It is considered that, even when only an optimal Rx beam changes and an optimal Tx beam does not change (for example, when the UE rotates), a reference signal (RS) is required for beam maintenance to avoid a beam failure.

By utilizing AI, the base station may be able to predict the AoA of a signal on the UE side. It is considered that, by reporting information related to the AoA of a signal to the UE, the UE can determine the Rx beam (without beam sweeping on the Rx side), and overhead of a signal for beam measurement can be reduced.

However, full studies have not been carried out on a method of determining a beam using the AoA/AoD. Unless these studies are fully carried out, appropriate overhead reduction/high-accuracy channel estimation/high-efficiency use of resources cannot be achieved, which may hinder enhancement of communication throughput/communication quality.

In view of this, the inventors of the present invention came up with the idea of a preferable control method for beam determination using information related to the AoA/AoD. Note that each embodiment of the present disclosure may be applied when AI/prediction is not used.

In one embodiment of the present disclosure, the terminal (user terminal, User Equipment (UE))/base station (BS) performs training of an ML model in a training mode, and implements the ML model in a test mode (also referred to as a testing mode or the like). In the test mode, validation of the accuracy of the ML model trained in the training mode (trained ML model) may be performed.

In the present disclosure, the UE/BS may input channel state information, a reference signal measurement value, and the like to the ML model and output highly accurate channel state information / measured value / beam selection/position, future channel state information / radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, the object may be, for example, an apparatus, a device, or the like, such as a terminal or a base station. The object may correspond to a program included in the apparatus.

In the present disclosure, the ML model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, the ML model may be interpreted as at least one of a model, an AI model, predictive analytics, a predictive analytics model, and the like. The ML model may be derived by using at least one of regression analysis (for example, linear regression analysis, multiple regression analysis, logistic regression analysis), support vector machine, random forest, neural network, deep learning, and the like. In the present disclosure, the model may be interpreted as at least one of an encoder, a decoder, a tool, and the like.

The ML model outputs at least one piece of information among an estimated value, a predicted value, a selected operation, classification, and the like, based on the input information.

Examples of the ML model may include supervised learning, unsupervised learning, and reinforcement learning. The supervised learning may be used to perform learning of a general rule for mapping an input to an output. The unsupervised learning may be used to perform learning of characteristics of data. The reinforcement learning may be used to perform learning of operation for maximizing a goal.

In each of the embodiments to be described below, description will be given mainly by assuming a case of using supervised learning for an ML model, but this is not restrictive.

In the present disclosure, "perform," "manage," "operate," "carry out," and the like may be interchangeably interpreted. In the present disclosure, test, after-training, substantial use, actual use, and the like may be interchangeably interpreted. A signal may be interpreted as a signal/channel and vice versa.

In the present disclosure, the training mode may correspond to a mode in which a UE/BS transmits/receives a signal for an ML model (in other words, an operation mode in a training period). In the present disclosure, the test mode may correspond to a mode in which a UE/BS performs an ML model (for example, performs a trained ML model to predict an output) (in other words, an operation mode in a test period).

In the present disclosure, the training mode may mean, with respect to a specific signal to be transmitted in the test mode, a mode in which the specific signal having large overhead (for example, having a large amount of resources) is transmitted.

In the present disclosure, the training mode may mean a mode in which a first configuration (for example, a first DMRS configuration, a first CSI-RS configuration) is referred to. In the present disclosure, the test mode may mean a mode in which a second configuration (for example, a second DMRS configuration, a second CSI-RS configuration), which is different from the first configuration, is referred to. In the first configuration, a larger number of at least one of time resources, frequency resources, coding resources, ports (antenna ports) related to measurement than those in the second configuration may be configured.

Embodiments according to the present disclosure will be described in detail with reference to the drawings as follows. The radio communication methods according to respective embodiments may each be employed individually, or may be employed in combination.

In the following embodiments, description will be given of an ML model related to UE-BS communication, and hence related subjects are a UE and a BS. However, application of each of the embodiments of the present disclosure is not limited to this. For example, regarding communication between other entities (for example, communication between UEs), the UE and the BS in the following embodiments may be interpreted as a first UE and a second UE. In other words, the UE, the BS, and the like in the present disclosure may each be interpreted as any UE/BS.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, an antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), an unified TCI state, a common TCI state, a quasi-co-location (QCL), a QCL assumption, and the like may be interchangeably interpreted. The UE capability value set may include a maximum number of supported SRS ports, for example.

In the following embodiments, an angle at which a signal arrives in the UE, an AoA in the UE, an AoA, an AoA in the base station may be interchangeably interpreted. In the present disclosure, an angle at which a signal departs in the UE, an AoD in the UE, and an AoD in the base station may be interchangeably interpreted. In the present disclosure, the AoA and the AoD may be interchangeably interpreted. In the present disclosure, the UE and the base station may be interchangeably interpreted.

In the present disclosure, a signal, a channel, a reference signal, and a channel/signal/RS may be interchangeably interpreted. In the present disclosure, a DL channel/signal may be at least one of a Physical Downlink Shared Channel (PDSCH), a Physical Downlink Control Channel (PDCCH), a channel state information reference signal (CSI-RS), a demodulation reference signal (DMRS), a positioning reference signal (PRS), and a phase tracking reference signal (PTRS). In the present disclosure, a UL channel/signal may be at least one of a Physical Uplink Shared Channel (PUSCH), a Physical Uplink Control Channel (PUCCH), a random access channel (Physical Random Access Channel (PRACH)) sounding reference signal (SRS), and a demodulation reference signal (DMRS).

In the present disclosure, timing, time, time, a time instance, a slot, a sub-slot, a symbol, a subframe, and the like may be interchangeably interpreted.

In the present disclosure, estimation, prediction, and inference may be interchangeably interpreted. In the present disclosure, estimate, predict, and infer may be interchangeably interpreted.

Each embodiment/aspect/option/alternative/variation of the present disclosure may be used based on at least one of the following conditions:
- configuration of an (explicitly) corresponding higher layer parameter.
- configuration of an (implicitly) related higher layer parameter.
- indication of a MAC CE/DCI (a field included therein).
- (reported) UE capability.
- definition in a specification.
- specific condition defined in a specification.
- configuration/indication of at least one of a higher layer parameter, a MAC CE, DCI, and a (reported) UE capability.

Each embodiment/aspect/option/variation of the present disclosure may be used individually, or may be used in combination.

### (Radio Communication Method)

### <Zeroth Embodiment>

The base station may report information related to the AoA/AoD to the UE.

The UE may determine an (optimal) Rx beam, based on the information related to the AoA reported from the base station.

The UE may determine an (optimal) Tx beam, based on the information related to the AoD (in the UE) reported from the base station.

The UE may determine at least one of the Rx beam to be used for reception of a DL signal and the Tx beam to be used for transmission of a UL signal in accordance with the following steps #0 to #4.

### [Step #0]

The base station may receive/acquire information related to the position of the UE.

The UE may transmit/report information related to the position of the UE.

For example, the information related to the position of the UE may be information based on positioning of the UE defined in a specification. The information related to the position of the UE may be, for example, information related to the position of the UE based on a reference signal (for example, a PRS/SRS).

For example, the information related to the position of the UE may be for example, information related to the position of the UE based on the Global Navigation Satellite System (GNSS)/Global Positioning System (GPS).

### [Step #1]

The base station may estimate a transmission path of a signal, based on the information related to the position of the UE.

The transmission path may be a transmission path having the best (highest) received power/received quality (for example, RSRP/RSRQ/SINR) of a signal in the UE.

The transmission path may be indicated using the AoA/AoD.

The base station may determine the Tx beam (in the base station), based on the AoD (which may be the AoD in the base station).

The UE may determine the Rx beam (in the UE), based on the AoA (which may be the AoA in the UE). The UE may determine the Tx beam (in the UE), based on the AoD (which may be the AoD in the UE).

Estimation of the transmission path in the base station may be performed in an AI model/database in the base station.

### [Step #2]

The base station may transmit/report the estimated information related to the AoA/AoD to the UE.

The information related to the AoA may be the information related to the AoA for DL reception. The information related to the AoD may be the information related to the AoD (in the UE) for UL transmission.

### [Step #3]

The UE may determine at least one of the Rx beam used for reception of a DL signal and the Tx beam used for transmission of a UL signal, based on the information related to the AoA/AoD.

### <First Embodiment>

A first embodiment will describe a method of reporting the information related to the AoA/AoD.

The UE may receive the information related to the AoA/AoD indicated by specific information.

The specific information may be, for example, at least one of the following option 1-1 and option 1-2. The UE/base station may use the following option 1-1 and option 1-2 in combination.

### <<Option 1-1>>

The information related to the AoA/AoD may be indicated based on a value obtained by quantifying/quantizing a specific angle.

The specific angle may be indicated by an angle in a global coordinate system (GCS)/local coordinate system (LCS). The GCS may be defined for a system including a plurality of base stations and a plurality of UEs. In the LCS, an array antenna for one base station or one UE may be defined. The LCS is used as a reference to define a vector far-field of each antenna element in the array. The vector far-field is a pattern and a polarization. An arrangement of the array in the GCS may be defined by conversion between the GCS and the LCS. The GCS/LCS may be, for example, derived based on a definition or a conversion expression that may be recognized by a person skilled in the art (that may be defined in a specification).

The specific angle may be a combination of a first angle and a second angle. For example, the first angle may be a horizontal angle, and the second angle may be a vertical angle.

The GCS/LCS may be defined in advance, or may be reported to the UE using higher layer signaling/DCI.

The UE may determine a reference of the reported angle, based on the GCS/LCS. The UE may determine a first axis as a reference of a first angle and determine a second axis as a reference of a second angle, out of three axes constituting the GCS/LCS.

In a case of the GCS, each of the three axes constituting the GCS may be determined as a specific direction. For example, in a case of the GCS, each of the three axes constituting the GCS may be a specific azimuth (for example, a north direction/east direction/vertical direction).

The first angle/second angle may be represented using a specific range/granularity.

The specific range may be a range from a first value to a second value, for example. For example, the first value may be 0°, and the second value may be 180°. For example, the first value may be 0°, and the second value may be 360°. For example, the first value may be -θ° (θ is any integer), and the second value may be θ°.

For example, the specific granularity may be in a unit of 1°, may be in a unit of 10°, or may be any angle.

Note that, although the unit of angle shown in the present disclosure is described mainly using "degree" as an example, the unit of angle is not limited to this. For example, the unit of angle may be "radian".

As an example, the first angle and the second angle ((first angle, second angle)) may be represented by (65 (degrees, °), 80 (degrees, °)).

### [Option 1-1-1]

The UE may receive the information related to the AoA/AoD in accordance with at least one of the following options 1-1-1-1 to 1-1-1-3. The UE/base station may use at least two of the following options 1-1-1-1 to 1-1-1-3 in combination.

### (Option 1-1-1-1)

The UE may receive the information related to the AoA/AoD, using RRC signaling (RRC parameter).

The RRC parameter may be a parameter indicating the AoA/AoD.

The parameter indicating the AoA/AoD may be included in a parameter related to a configuration of a cell, or may be included in a parameter for configuring a DL/UL channel/signal.

The parameter indicating the AoA/AoD may be included in at least one of a parameter (TCI-State) for configuring the TCI state, a parameter (QCL-Info) for configuring the QCL information, and the parameter related to a configuration of the cell. In order to report the parameter indicating the AoA/AoD, at least one of the parameter (TCI-State) for configuring the TCI state, the parameter (QCL-Info) for configuring the QCL information, and the parameter related to a configuration of a cell in existing specifications (Rel. 15 to Rel. 17) may be enhanced.

The parameter indicating the AoA/AoD may include at least one of information indicating a type of the AoA/AoD, information indicating the first angle of the AoA/AoD, and information indicating the second angle of the AoA/AoD.

The information indicating a type of the AoA/AoD may indicate one of the GCS and the LCS, for example. The information indicating the first angle of the AoA/AoD may be information indicating a horizontal angle of the AoA/AoD, for example. The information indicating the second angle of the AoA/AoD may be information indicating a vertical angle of the AoA/AoD, for example.

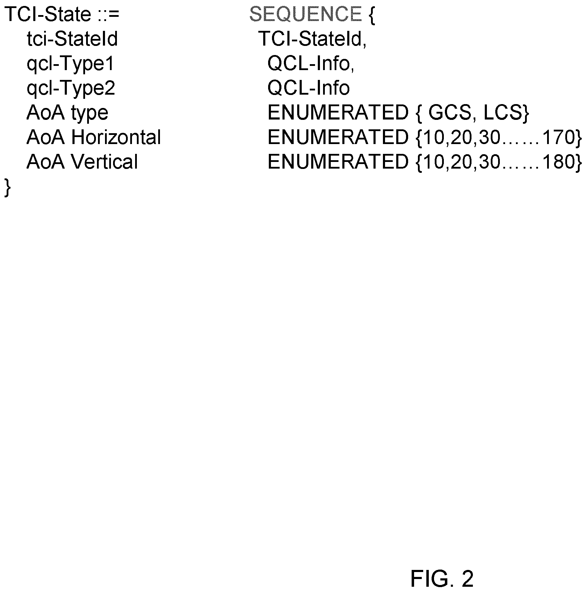

FIG. 2 is a diagram to show an example of a method of configuring the parameter indicating the AoA/AoD according to option 1-1-1-1. In FIG. 2, the parameter indicating the AoA is configured for the UE, using RRC signaling.

In the example shown in FIG. 2, the parameter indicating the AoA is included in the parameter for configuring the TCI state. In the example shown in FIG. 2, as the parameter indicating the AoA, information (AoA type) indicating a type of the AoA/AoD, information (AoA Horizontal) indicating the first angle of the AoA/AoD, and information (AoA Vertical) indicating the second angle of the AoA/AoD are included.

### (Option 1-1-1-2)

The UE may receive the information related to the AoA/AoD, using a MAC CE.

The MAC CE for reporting the information related to the AoA/AoD may include a new LCID (Logical Channel ID) (defined in Rel. 18 or later versions) in a MAC subheader of a MAC Protocol Data Unit (PDU) including the MAC CE.

Regarding the MAC CE for reporting the information related to the AoA/AoD, an existing MAC CE (defined in Rel. 15/16/17) may be used. Regarding the MAC CE for reporting the information related to the AoA/AoD, an octet/field including the information related to the AoA/AoD may be added to the existing MAC CE.

### (Option 1-1-1-3)

The UE may receive the information related to the AoA/AoD, using DCI.

In the DCI, a field indicating the AoA/AoD may be included.

The UE may determine the AoA/AoD, based on a value of the field indicating the AoA/AoD.

For example, the UE may determine the AoA/AoD from the AoA/AoD configured by the RRC parameter described in option 1-1-1-1 above, using the value of the field indicating the AoA/AoD.

The field indicating the AoA/AoD may be a field to be newly defined (in Rel. 18 or later versions). When the field is included in the DCI, the UE may ignore a specific field (for example, the TCI field) in the DCI.

The field indicating the AoA/AoD may be the TCI field. The UE may receive an association between the TCI state/QCL information and the information related to the AoA/AoD (using higher layer (RRC) signaling). The UE may determine the AoA/AoD, based on the information related to the AoA/AoD associated with the TCI state in the TCI field indicated.

The field indicating the AoD may be an SRI field. The UE may receive an association between at least one of SRS resources and spatial relation information corresponding to an SRS and the information related to the AoA/AoD (using higher layer (RRC) signaling). The UE may determine the AoA/AoD, based on the information related to the AoA/AoD associated with the SRS resources/spatial relation in the SRI field indicated.

### [Option 1-1-2]

The base station may report information related to candidates of the AoA/AoD corresponding to the transmission path to the UE. The base station may report a plurality of pieces of the information to the UE.

The information may be reported to the UE, using the method described in option 1-1-1 above.

The UE may determine/select one or a plurality of AoAs/AoDs from the plurality of pieces of information, based on measurement in the UE.

According to option 1-2, in a case of NLOS, even when a sudden blocking or the like occurs, quality of communication can be maintained.

### [Option 1-1-3]

The AoA/AoD may be associated with a timing offset related to application of the AoA/AoD.

The base station may report/indicate a plurality of AoAs/AoDs associated with different timing offsets to the UE.

The UE may apply/configure a (temporally changing) corresponding Rx beam, based on the plurality of reported/indicated timing offsets.

The timing offset may indicate a period from a specific timing (for example, reception of an indication related to the AoA/AoD, transmission of a confirmation (which may be higher layer signaling or may be a HARQ-ACK) for reception of the indication, or the like) to application of the AoA/AoD.

Of the plurality of timing offsets corresponding to the AoAs/AoDs, a timing offset corresponding to a first AoA/AoD may indicate a period from reception of an indication related to the AoA/AoD to application of the first AoA/AoD. Of the plurality of timing offsets corresponding to the AoAs/AoDs, a timing offset corresponding to an n-th (n is an integer of 2 or greater) AoA/AoD may indicate a period from a timing of application of an (n-1)-th AoA/AoD to application of the n-th AoA/AoD.

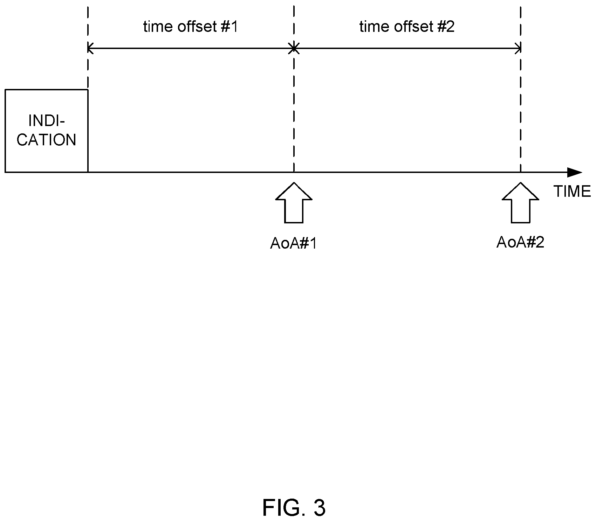

FIG. 3 is a diagram to show an example of application of the AoA according to option 1-1-3. In the example shown in FIG. 3, the UE receives an indication related to AoA #1 and AoA #2. Note that, although in FIG. 3, an example related to the AoA will be described, application is also possible for operation related to the AoD.

In the example shown in FIG. 3, AoA #1 and AoA #2 are respectively associated with time offset #1 and time offset #2. At a timing after an elapse of time offset #1 from reception of the indication (last symbol in resources), the UE determines to apply the Rx beam using AoA #1 in a subsequent period. At a timing after time offset #2 from application related to AoA #1, the UE determines to apply the Rx beam using AoA #2 in a subsequent period.

According to option 1-1 described above, by reporting information related to an angle, the Rx/Tx beam to be used by the UE can be determined.

### <<Option 1-2>>

The information related to the AoA/AoD may be indicated based on information related to direction grids.

The information related to direction grids may be defined in a specification in advance, or may be configured for the UE using higher layer signaling.

A geometric/geographic space may be divided into grids according to specific granularity/range. Each grid may be assigned a different index.

The direction grids may be configured based on a mathematical expression defined in advance, using parameters defined/configured in advance.

One grid may correspond to information related to a horizontal angle and information related to a vertical angle.

Each grid may be associated with one of the GCS and the LCS. When there is no association with the GCS or the LCS in the grid, the UE may assume/determine association with the GCS.

The specific granularity/range may be defined/configured in advance.

### [Option 1-2-1]

The base station may report/configure information related to the specific granularity/range of the direction grids to the UE.

The report/indication may be performed using higher layer signaling (for example, RRC).

The granularity may indicate how many grids the space is to be divided into in the horizontal direction/vertical direction. The granularity may indicate a distance (that is, the number of divisions) between the horizontal/vertical grids in the space. The distance between the horizontal/vertical grids in the space may be represented using an angle, or may be represented using a phase difference between (horizontal/vertical) antennas.

The range may indicate a length of a boundary (range) of the horizontal/vertical direction grids.

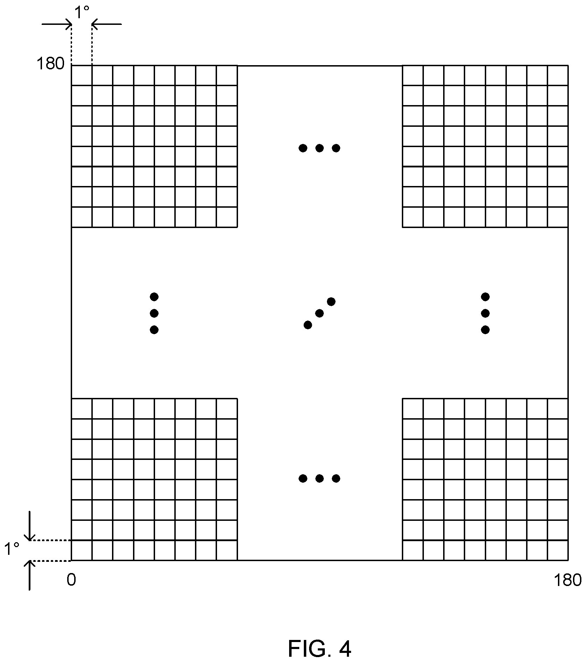

FIG. 4 is a diagram to show an example of the direction grids indicating information related to the AoAs/AoDs according to option 1-2. In the example shown FIG. 4, a geometric space is divided according to specific granularity/range. In the example shown in FIG. 4, the space is divided according to granularity of 1° in the horizontal direction and 1° in the vertical direction. In the example shown in FIG. 4, the range of the direction grids is 0(°) to 180(°). Each grid is assigned an index.

In the example as shown in FIG. 4, the UE is indicated with the indexes of the direction grids. The UE determines corresponding horizontal angle and vertical angle in the direction grids corresponding to the indicated indexes. The UE uses the determined angles as the AoAs/AoDs.

Note that the granularity/range of the direction grids is not limited to the example shown in FIG. 4. The granularity of the direction grids may be any granularity, for example. The range of the direction grids may be a range from a value smaller than 0 to a value larger than 180, for example.

### [Option 1-2-2]

The UE may receive the information related to the AoA/AoD (information related to the index of the grid) in accordance with at least one of the following options 1-2-2-1 to 1-2-2-3. The UE/base station may use at least two of the following options 1-2-2-1 to 1-2-2-3 in combination.

### (Option 1-2-2-1)

The UE may receive the information related to the AoA/AoD, using RRC signaling (RRC parameter).

The RRC parameter may be a parameter indicating the index associated with the AoA/AoD (the index of the grid).

The parameter may be included in a parameter related to a configuration of a cell, or may be included in a parameter for configuring a DL/UL channel/signal.

The parameter may be included in at least one of a parameter (TCI-State) for configuring the TCI state, a parameter (QCL-Info) for configuring the QCL information, and the parameter related to a configuration of the cell. In order to report the parameter, at least one of the parameter (TCI-State) for configuring the TCI state, the parameter (QCL-Info) for configuring the QCL information, and the parameter related to a configuration of a cell in existing specifications (Rel. 15 to Rel. 17) may be enhanced.

The parameter may be associated with one of the GCS and the LCS. When there is no association with the GCS or the LCS in the parameter, the UE may assume/determine that the parameter is associated with the GCS.

### (Option 1-2-2-2)

The UE may receive the information related to the AoA/AoD (the index of the grid), using a MAC CE.

The MAC CE for reporting the information related to the AoA/AoD (the index of the grid) may include a new LCID (Logical Channel ID) (defined in Rel. 18 or later versions) in a MAC subheader of a MAC Protocol Data Unit (PDU) including the MAC CE.

Regarding the MAC CE for reporting the information related to the AoA/AoD (the index of the grid), an existing MAC CE (defined in Rel. 15/16/17) may be used. Regarding the MAC CE for reporting the information related to the AoA/AoD, an octet/field including the information related to the AoA/AoD may be added to the existing MAC CE.

### (Option 1-2-2-3)

The UE may receive the information related to the AoA/AoD (the index of the grid), using DCI.

In the DCI, a field indicating the index of the grid may be included.

The UE may determine the AoA/AoD, based on a value of the field indicating the index of the grid.

For example, the UE may determine the AoA/AoD from the parameter configured by the RRC parameter described in option 1-2-2-1 above, using the value of the field indicating the index of the grid.

The field indicating the index of the grid may be a field to be newly defined (in Rel. 18 or later versions). When the field is included in the DCI, the UE may ignore a specific field (for example, the TCI field) in the DCI.

The field indicating the index of the grid may be the TCI field. The UE may receive an association between the TCI state/QCL information and the information related to the index of the grid (using higher layer (RRC) signaling). The UE may determine the AoA/AoD, based on the information related to the index of the grid associated with the TCI state in the TCI field indicated.

The field indicating the AoD may be an SRI field. The UE may receive an association between at least one of SRS resources and spatial relation information corresponding to an SRS and the information related to the index of the grid (using higher layer (RRC) signaling). The UE may determine the AoA/AoD, based on the information related to the index of the grid associated with the SRS resources/spatial relation in the SRI field indicated.

### [Option 1-2-3]

The base station may report information related to candidates of the AoA/AoD (information related to the index of the grid) corresponding to the transmission path to the UE. The base station may report a plurality of pieces of the information to the UE.

The information may be reported to the UE, using the method described in option 1-2-1 above.

The UE may determine/select one or a plurality of indexes of grids (AoAs/AoDs) from the plurality of pieces of information, based on measurement in the UE.

According to option 1-2-3, in a case of NLOS, even when a sudden blocking or the like occurs, quality of communication can be maintained.

### [Option 1-2-4]

The one grid (AoA/AoD) may be associated with a timing offset related to application of the AoA/AoD.

The base station may report/indicate a plurality of indexes of grids associated with different timing offsets to the UE.

The UE may apply/configure a (temporally changing) corresponding Rx beam, based on the plurality of reported/indicated timing offsets.

The timing offset may indicate a period from reception of an indication related to the index of the grid (AoA/AoD) to application of the AoA/AoD corresponding to the index of the grid.

The timing offset may indicate a period from a specific timing (for example, reception of an indication related to the index of the grid (AoA/AoD), transmission of a confirmation (which may be higher layer signaling or may be a HARQ-ACK) for reception of the indication, or the like) to application of the AoA/AoD.

Of the plurality of timing offsets corresponding to the indexes of the grids, a timing offset corresponding to an index of a first grid may indicate a period from reception of an indication related to the index of the grid to application of the AoA/AoD corresponding to the index of the first grid. Of the plurality of timing offsets corresponding to the indexes of the grids, a timing offset corresponding to the AoA/AoD corresponding to an index of an n-th (n is an integer of 2 or greater) grid may indicate a period from a timing of application of the AoA/AoD corresponding to an index of an (n-1)-th grid to application of the AoA/AoD corresponding to the index of the n-th grid.

According to option 1-2 described above, by reporting information related to an angle using the index of the grid, the Rx/Tx beam to be used by the UE can be determined.

According to the first embodiment described above, the Rx beam/Tx beam to be used by the UE can be appropriately determined.

### <Second Embodiment>

A second embodiment will describe a method of determining a beam of the UE, based on an indication from the base station.

The UE may determine/decide at least one of the Rx beam used for reception of a DL signal and the Tx beam used for UL transmission, based on the configuration/indication (for example, the information related to the AoA/AoD described in the first embodiment) from the base station.

The UE may determine the Rx beam/Tx beam in accordance with at least one of the following options 2-1 to 2-5.

### <<Option 2-1>>

When the indicated AoA/AoD is based on the GCS, the UE may convert the AoA/AoD to a value based on the LCS.

The UE may determine an (appropriate) Rx beam/Tx beam that matches the indicated direction.

The UE may decide/determine conversion of the direction, based on information related to a certain sensor.

The UE may recognize the Rx beam (which may be referred to as an Rx beam pattern)/Tx beam (which may be referred to as a Tx beam pattern) in the determined/converted AoA/AoD. In this case, the base station need not recognize the Rx beam/Tx beam recognized by the UE.

### <<Option 2-2>>

The UE may transmit/report feedback information for the configuration/indication related to a beam of the UE to the base station.

The feedback information may be transmitted using UCI, for example. The UE may transmit the feedback information, using UCI (for example, HARQ-ACK information/CSI report).

When the information related to a plurality of AoAs/AoDs is indicated to the UE from the base station, the UE may report one or a plurality of selected/determined AoAs/AoDs to the base station.

### <<Option 2-3>>

The UE may perform transmission/feedback of a request for measurement in the indicated beam/direction to the base station.

The measurement may be performed by the UE regarding the Rx beam, or may be performed by the base station regarding the Tx beam. The base station may transmit information (for example, trigger information) for causing the UE to perform measurement for a requested beam/direction to the UE, and the UE may perform the measurement. The base station may transmit information (for example, trigger information) for causing the UE to perform transmission for a requested beam/direction to the UE, the UE may perform the transmission, and the base station may perform the measurement.

The feedback may be transmitted using UCI, for example. The UE may transmit the feedback, using UCI (for example, HARQ-ACK information/CSI report).

### c

When measurement results related to the request are below a specific threshold, the UE may transmit a request for switch/fallback to the beam indication using the TCI state/QCL information (or the beam determination using beam sweeping) to the base station. The base station may transmit information for disabling beam determination based on the AoA/AoD (or enabling beam determination using beam sweeping) to the UE that has transmitted the request.

According to the method, even when beam quality in the beam indication using the AoA/AoD is poor, beam quality can be secured by falling back to beam determination using beam sweeping.

### <<Option 2-4>>

The UE may transmit feedback information regarding the indicated Tx beam (beam/direction to be used for UL transmission) to the base station.

The feedback information may be transmitted using UCI, for example. The UE may transmit the feedback information, using UCI (for example, HARQ-ACK information/CSI report).

### <<Option 2-5>>

The UE may determine that at least one of reporting related to the position of the UE and a request for the information related to the AoA/AoD is triggered.

When a specific condition is satisfied, the UE may determine that the trigger is performed.

The specific condition may be a condition based on rotation of the UE, for example. When the UE determines that the UE (itself) has rotated, the UE may determine to perform at least one of update of the Rx beam/Tx beam and a request for the information related to the AoA/AoD. When the indicated AoA/AoD corresponds to the GCS, the UE may determine not to perform at least one of update of the Rx beam/Tx beam and a request for the information related to the AoA/AoD.

The UE may determine rotation of the UE, based on at least one of information based on a sensor and measurement results of a specific DL signal.

The specific condition may be a condition based on movement of the UE, for example. When the UE determines that the UE has moved, the UE may determine to perform at least one of update of the Rx beam/Tx beam and reporting related to the position of the UE.

The UE may determine movement of the UE, based on at least one of information based on a sensor and measurement results of a specific DL signal.

### [Option 2-5-1]

The UE may periodically transmit at least one of reporting related to the position of the UE and a request for the information related to the AoA/AoD.

The base station may configure the UE with periodic reporting related to the position of the UE. The configuration may be performed using higher layer signaling/DCI.

Based on contents of the position information to be reported, the UE may transmit the information by including the information in the PUSCH/PUCCH.

The base station may configure the UE with transmission of a periodic request for the information related to the AoA/AoD. The configuration may be performed using higher layer signaling/DCI.

The UE may transmit the request for the information related to the AoA/AoD, using the PUCCH/PUSCH/SRS. For example, when the UE transmits the request for the information related to the AoA/AoD using the SRS, the SRS may be generated/transmitted with a scramble based on the request being applied.

### [Option 2-5-2]

The UE may transmit at least one of reporting related to the position of the UE and a request for the information related to the AoA/AoD, based on a specific event.

The specific event may be defined in a specification in advance, or a condition may be configured for the UE using higher layer signaling.

The specific event may be at least one of the position of the UE changing beyond a specific threshold and received power/received quality (for example, RSRP/RSRQ/SINR/BLER (Block Error Rate)) of a received signal falling below a specific threshold (requirement), for example.

The UE may transmit at least one of reporting related to the position of the UE and a request for the information related to the AoA/AoD, using the PUCCH/PUSCH/SRS.

According to the second embodiment described above, the Rx beam/Tx beam to be used by the UE can be appropriately determined.

### <Third Embodiment>

A third embodiment will describe switching/fallback between the beam indication using the AoA/AoD and the beam indication using the TCI state/QCL information.

In the present disclosure, a beam indication using the AoA/AoD, a beam indication using the information related to the AoA/AoD, and an AoA/AoD-based beam indication may be interchangeably interpreted.

In the present disclosure, a beam indication using the TCI state/QCL information, a beam indication using a specific type of QCL (for example, QCL type D), a TCI state/QCL information-based beam indication, a QCL-type D based beam indication, and a beam indication based on beam sweeping/measurement report may be interchangeably interpreted.

The UE may support switching/fallback between the beam indication using the AoA/AoD and the beam indication using the TCI state/QCL information.

The UE may determine to perform switching/fallback between the beam indication using the AoA/AoD and the beam indication using the TCI state/QCL information, based on a specific condition.

The UE may assume that a field included in the DCI is to be changed according to one of a case in which the beam indication using the AoA/AoD is applied and a case in which the beam indication using the TCI state/QCL information is applied. The UE may interchangeably interpret specific fields included in the DCI of a case in which the beam indication using the AoA/AoD is applied (or a case in which the beam indication using the TCI state/QCL information is applied) and a case in which the beam indication using the TCI state/QCL information is applied (or a case in which the beam indication using the AoA/AoD is applied).

The specific condition may be whether or not the position of the UE (information related thereto) is available. For example, whether or not the position of the UE (information related thereto) is available may be determined depending on whether or not an RRC parameter (for example, "includeCommonLocationInfo") indicating whether or not common position information is included is set to "true (or enabled)" for the UE.

For example, when the position of the UE is available, the UE may determine to apply the beam indication using the AoA/AoD, and when the position of the UE is unavailable, the UE may determine to apply the beam indication using the TCI state/QCL information.

The specific condition may be whether or not a specific UE capability/base station capability is limited. For example, the UE capability/base station capability may be a capability related to the beam indication using the AoA/AoD.

For example, when the UE/base station supports the capability related to the beam indication using the AoA/AoD, the UE may determine to apply the beam indication using the AoA/AoD, and when the UE/base station does not support the capability related to the beam indication using the AoA/AoD, the UE may determine to apply the beam indication using the TCI state/QCL information.

The specific condition may be based on inaccuracy of estimation based on the AoA/AoD. For example, inaccuracy of estimation based on the AoA/AoD may be at least one of received power/received quality (for example, RSRP/RSRQ/SINR/BLER (Block Error Rate)) of a received signal using a beam using the AoA/AoD falling below a specific threshold (requirement) and occurrence of a beam failure.

For example, when received power/received quality of a received signal is the specific threshold or higher, the UE may apply the beam indication using the AoA/AoD, and when received power/received quality of a received signal is lower than the specific threshold, the UE may determine to apply the beam indication using the TCI state/QCL information.

The base station may report/configure/indicate information related to a mode of the beam indication to the UE.

The mode of the beam indication may be one of a beam indication mode using the AoA/AoD and a beam indication mode using the TCI state/QCL information.

Information related to the mode of the beam indication may be reported/configured/indicated to the UE, using higher layer signaling (RRC/MAC CE)/DCI.

Regarding the information related to the mode of the beam indication, an RRC parameter may be used. The RRC parameter may be newly defined (for example, in Rel. 18 or later versions).

The RRC parameter may be included in one of a parameter (for example, TCI-State) for configuring the TCI state and a parameter (for example, QCL-Info) for configuring the QCL information. In other words, in order to report the RRC parameter, one of the parameter (for example, TCI-State) for configuring the TCI state and the parameter (for example, QCL-Info) for configuring the QCL information may be enhanced.

Regarding the information related to the mode of the beam indication, a MAC CE may be used.

The MAC CE may include a new LCID (Logical Channel ID) (defined in Rel. 18 or later versions) in a MAC subheader of a MAC Protocol Data Unit (PDU) including the MAC CE.

Regarding the MAC CE, an existing MAC CE (defined in Rel. 15/16/17) may be used. Regarding the MAC CE, an octet/field including the information related to the mode of the beam indication may be added to the existing MAC CE.

Regarding the information related to the mode of the beam indication, DCI may be used. In the DCI, a field indicating the mode of the beam indication may be included.

The UE may trigger/report switching of the mode of the beam indication to the base station, using a UL channel (for example, the PUSCH/PUCCH).

### <Other Embodiments>

At least one of the embodiments described above may be applied only to the UE that has reported a specific UE capability or that supports the specific UE capability.

The specific UE capability may indicate at least one of the following:
- Capability related to the position of the UE (position information).
- Capability related to estimation of a transmission/reception direction of a signal.
- Capability related to estimation of at least one of a DL Rx beam and a UL Tx beam.
- Capability of converting the AoA/AoD indicated using the GCS to the LCS depending on a direction thereof.
- Maximum number of supported direction grids (granularity/range thereof).

The UE capability may be reported for each frequency, may be reported for each frequency range (for example, Frequency Range 1 (FR1), Frequency Range 2 (FR2), FR2-1, or FR2-2), may be reported for each cell, or may be reported for each subcarrier spacing (SCS).

The UE capability may be reported in common to time division duplex (TDD) and frequency division duplex (FDD), or may be reported independently.

At least one of the embodiments described above may be applied when the UE is configured with specific information related to the embodiments described above, using higher layer signaling. For example, the specific information may be information indicating enabling use of an AI model for beam determination, any RRC parameter for a specific release (for example, Rel. 18/19), or the like.

According to other embodiments described above, the UE can implement the above functions while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

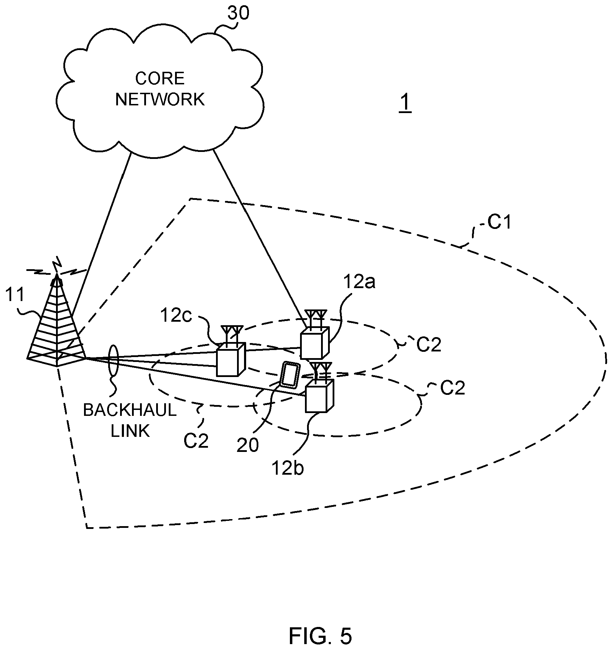

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

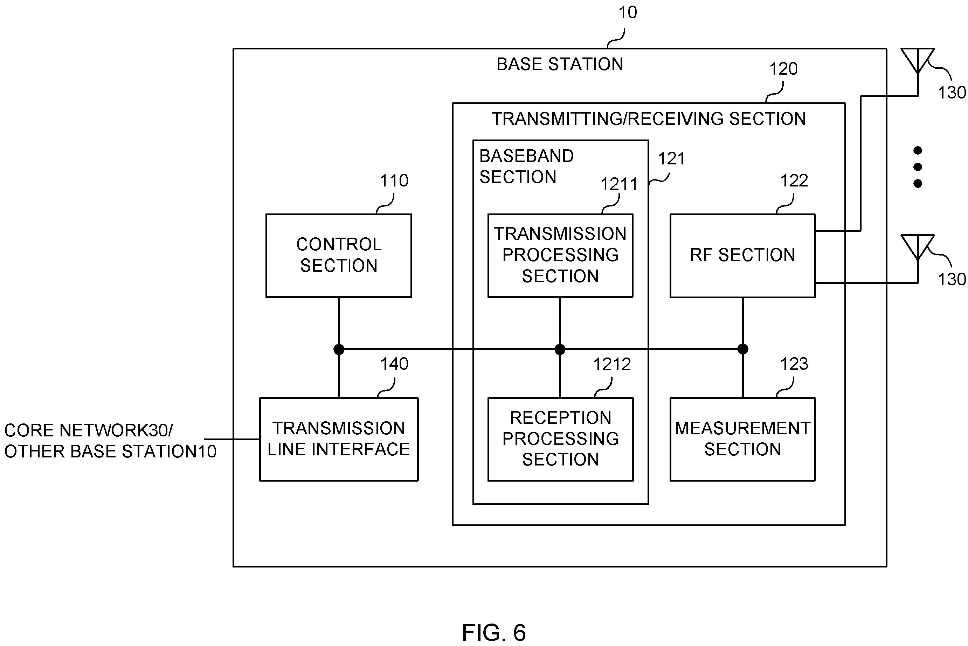

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmission/reception section 120 may receive position information of a terminal. The transmitting/receiving section 120 may transmit at least one of first information related to an angle of arrival of a signal in the terminal based on the position information and second information related to an angle of departure of a signal in the terminal based on the position information. The control section 110 may indicate at least one of a receive beam of a downlink signal in the terminal by using the first information and a transmit beam of an uplink signal in the terminal by using the second information (zeroth and first embodiments).

### (User Terminal)

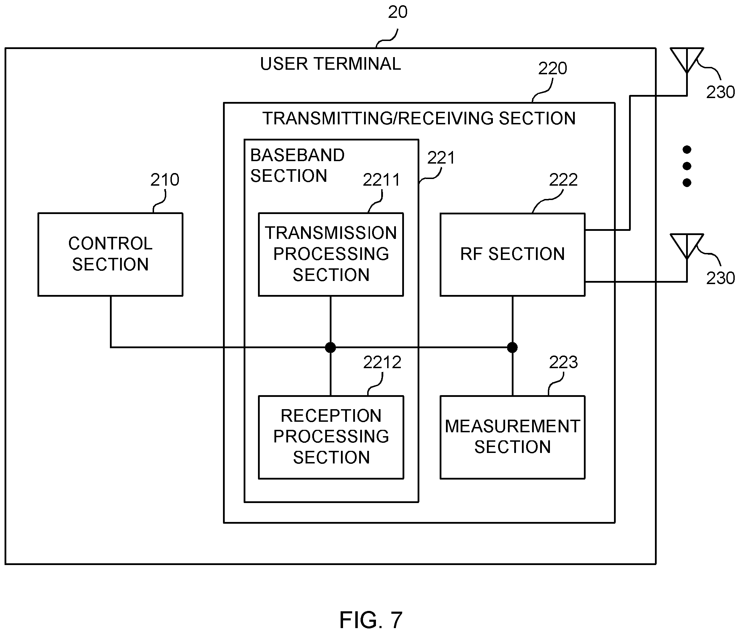

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may transmit position information of the terminal. The transmitting/receiving section 220 may receive at least one of first information related to an angle of arrival of a signal in the terminal based on the position information and second information related to an angle of departure of a signal in the terminal based on the position information. The control section 210 may determine at least one of a receive beam of a downlink signal based on the first information and a transmit beam of an uplink signal based on the second information (zeroth and first embodiments).

The transmitting/receiving section 220 may receive a plurality of pieces of information related to a time offset associated with at least one of the first information and the second information. The control section 210 may determine, based on a piece of the information related to the time offset, an application timing of the first information corresponding to the piece of the information related to the time offset and the second information corresponding to the piece of the information related to the time offset (first embodiment).

The control section 210 may control transmission of feedback information for at least one of the first information and the second information (second embodiment).

The control section 210 may determine switching between application of a beam based on at least one of the first information and the second information and application of a beam based on at least one of a transmission configuration indication (TCI) state and quasi-co-location (QCL) information, based on a specific condition (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

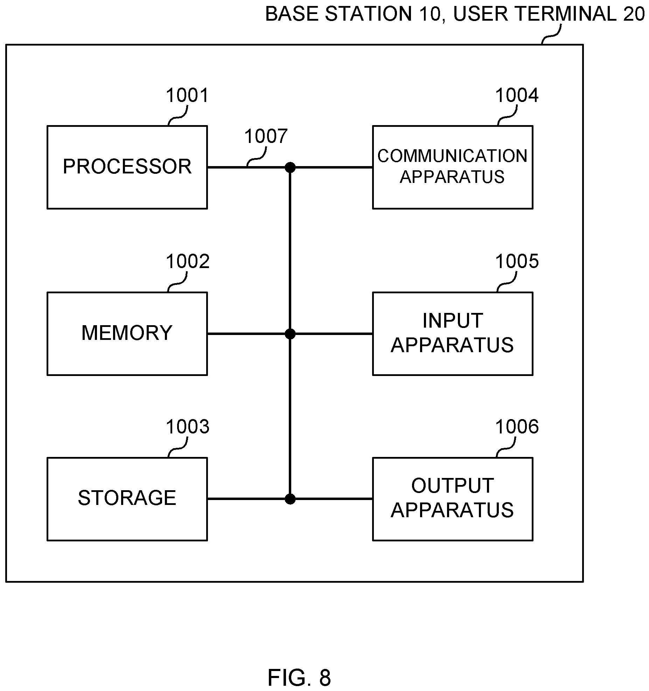

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the base station transmitting information to the terminal may be interchangeably interpreted as the base station indicating control/operation based on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

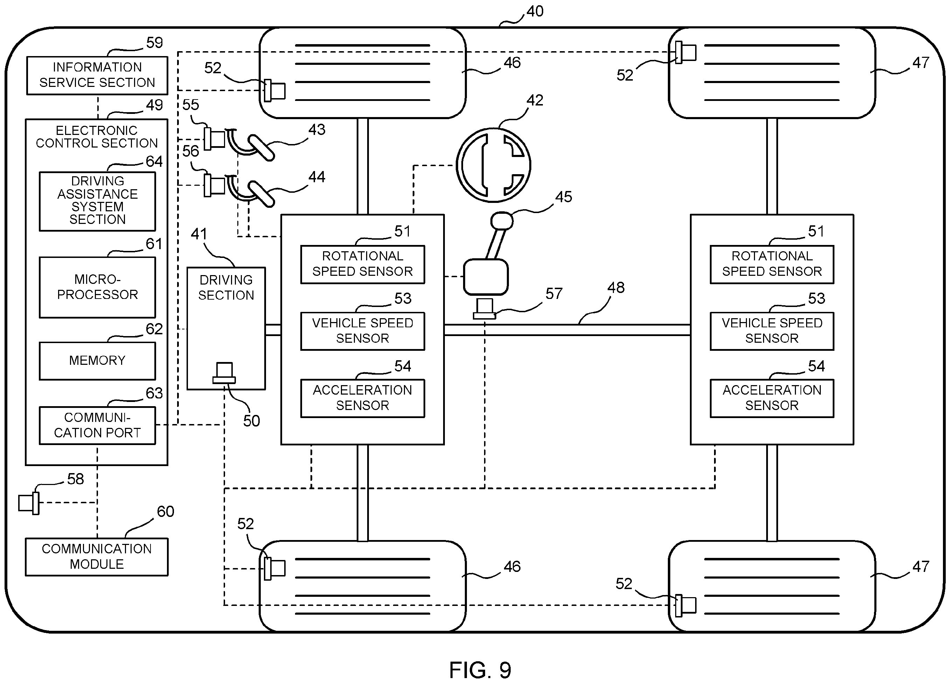

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting section that transmits position information of the terminal;
a receiving section that receives at least one of first information related to an angle of arrival of a signal in the terminal based on the position information and second information related to an angle of departure of a signal in the terminal based on the position information; and
a control section that judges at least one of a receive beam of a downlink signal based on the first information and a transmit beam of an uplink signal based on the second information.

2. The terminal according to claim 1, wherein
the receiving section receives a plurality of pieces of information related to a time offset associated with at least one of the first information and the second information, and
the control section judges, based on a piece of the information related to the time offset, an application timing of the first information corresponding to the piece of the information related to the time offset and the second information corresponding to the piece of the information related to the time offset.

3. The terminal according to claim 1, wherein
the control section controls transmission of feedback information for at least one of the first information and the second information.

4. The terminal according to claim 1, wherein
the control section judges switching between application of a beam based on at least one of the first information and the second information and application of a beam based on at least one of a transmission configuration indication (TCI) state and quasi-co-location (QCL) information, based on a specific condition.

5. A radio communication method for a terminal, the radio communication method comprising:
transmitting position information of the terminal;
receiving at least one of first information related to an angle of arrival of a signal in the terminal based on the position information and second information related to an angle of departure of a signal in the terminal based on the position information; and
judging at least one of a receive beam of a downlink signal based on the first information and a transmit beam of an uplink signal based on the second information.

6. A base station comprising:
a receiving section that receives position information of a terminal;
a transmitting section that transmits at least one of first information related to an angle of arrival of a signal in the terminal based on the position information and second information related to an angle of departure of a signal in the terminal based on the position information; and
a control section that indicates at least one of a receive beam of a downlink signal in the terminal by using the first information and a transmit beam of an uplink signal in the terminal by using the second information.
